# EUROPÄISCHE PATENTSCHRIFT

(11) **EP 0 600 398 B1**
(45) Veröffentlichungstag und Bekanntmachung des Hinweises auf die Patenterteilung: **04.06.1997**
(21) Anmeldenummer: 93119142.3
(22) Anmeldetag: 27.11.1993
(51) Int. Cl.: B60C 9/20, B60C 9/30

(54) **Fahrzeugluftreifen mit asymmetrischen Gürteleigenschaften**
Vehicle tyre with asymmetrical belt properties
Bandage pneumatique ayant une ceinture à propriétes asymmétriques

(30) Priorität: 01.12.1992 DE 4240278
(43) Veröffentlichungstag der Anmeldung: 08.06.1994
(73) Patentinhaber: Uniroyal Englebert Reifen GmbH, D-52068 Aachen (DE)
(72) Erfinder: Poqué, Dionysius, D-52076 Aachen (DE)
(74) Vertreter: Schneider, Egon

(56) Entgegenhaltungen:
- EP-A- 0 371 754
- EP-A- 0 455 453
- EP-A- 0 474 314
- EP-A- 0 571 204
- DE-A- 4 205 058
- FR-A- 2 351 809
- LU-A- 44 250

## Beschreibung

Die Erfindung bezieht sich auf einen Fahrzeugluftreifen in Radialbauart mit einem gürtelverstärkten Laufstreifen, bei dem der Gürtel zusätzlich eine Bandagenabdecklage aus Verstärkungselementen aufweist, die aus unter Wärmeeinwirkung sich verkürzenden textilen Kord- oder Fadenmaterialien besteht und radial außen auf dem Gürtel vorliegt.

Bei Fahrzeugluftreifen ist es nach DE-OS 2 853 006 bekannt, den Gürtelverband, der bevorzugt aus ein oder zwei Lagen, letztere dabei in zueinander gekreuzter Anordnung, besteht, durch eine Abdecklage oder Abdeckstreifen zu bandagieren und zu stabilisieren. Bevorzugt werden dazu Korde oder Einfachgarne verwendet, die aus Polyamid oder Polyester bestehen und sich unter Wärmeeinwirkung verkürzen. Der Modul dieser Elemente ist verhältnismäßig groß. Bei der Reifenfertigung unter Druck und Wärme liegen die Verstärkungselemente dabei mit verhältnismäßig großer Spannung vor. Die Spannungen sind über Gürtelbreite gesehen nicht gleich. Insoweit können Verzerrungen im Laufstreifenbereich entstehen, die die Reifengleichförmigkeit (uniformity) beeinflussen. Bei der Reifenherstellung unter Druck und Wärme, insbesondere bei der Vulkanisation und Nachvulkanisation, ergibt sich ein radiales Wachstum, das als Erhebung bekannt ist und in der Regel 2 % bis 4 % beträgt. Die Entspannung des Gürtels durch die bandagenförmige Abdecklage liegt in etwa in der gleichen Größenordnung von 2 % bis 4 %.

Die Gebrauchseigenschaften von Fahrzeugluftreifen haben generell einen hohen technischen Stand erreicht. Ein weiterer Technologiesprung für diese in der Regel symmetrisch aufgebauten Reifen ist nur noch möglich durch Nutzung von asymmetrischen Elementen.

Asymmetrisch aufgebaute Reifen haben den Vorteil, daß die Außen- und Innenschulter der Reifen (fahrzeugseitig gesehen) je nach Anwendungsfall unterschiedliche Aufgaben erfüllen müssen. Hier liegt also noch ein Anwendungsfeld, durch asymmetrische Reifenaufbauten diesem Anforderungsprofil optimaler zu entsprechen. Beispiele für Anforderungen, welche durch asymmetrische Reifenkonstruktionen günstiger optimiert werden können sind:
- sportliches Fahrverhalten belastet besonders die Reifenaußenschulter,
- Fahrzeugsturz belastet besonders die Reifeninnenseite,
- das Vorbeifahrgeräusch (nach ISO 362) wird insbesondere durch die Druck- und Schlupfverhältnisse der Reifenmitte und/oder die Reifenschultern beeinflußt, je nach Massenverteilung des Laufflächenprofils kann das Reifenumfangswachstum besser durch asymmetrische Gürtelkonstruktionen unter Kontrolle gehalten werden.
   Dies ist besonders für Fahrzeuge wichtig, die geschwindigkeitsabgeregelt sind und/oder mit Antiblockier- und/oder Antischlupfsystemen ausgestattet sind.

Fahrzeugreifen sind je nach ihrer Radposition unterschiedlichen Belastungen ausgesetzt, die sich insbesondere im Bereich der beiden Gürtelkanten äußern. So wird bei Kurvenfahrt der Schulterbereich auf der dem Fahrzeug abgewandten Seite des Fahrzeugluftreifens stärker belastet als auf der Innenseite. Somit ist es wünschenswert, im Bereich der äußeren Schulterkante eine zusätzliche Verstärkung vorzusehen. Bei Vorspur und größerer Reifenkonizität als negativem Sturz ergibt sich die schon beschriebene Asymmetrie der Belastung schon bei der Geradeausfahrt.

Einige Reifenhersteller bieten deshalb schon Reifen mit asymmetrischen Merkmalen an.

Ziel der Erfindung ist es, die für den Reifenkronen- und Reifenschulterbereich unterschiedlichen Spannungszustände zu verwirklichen, um eine Bandagierung des Gürtels auf einfache und kostengünstige Art und Weise zu ermöglichen und um letztendlich einen Gürtelradialreifen für Hochgeschwindigkeitseignung zu erhalten, der in bezug auf das Reifengewicht, den Rollwiderstand sowie geringe Neigung zur Abflachung im Ruhezustand verbessert ist. Der Gürtel soll so durch eine Abdecklage bandagiert und stabilisiert werden, daß im wesentlichen über Gürtelbreite gesehen im Reifenmittenbereich und in den Reifenschulterbereichen im Fahrbetrieb eine im wesentlichen ausgeglichene Spannung vorliegt.

Ein weiteres Ziel der vorliegenden Erfindung ist es, daß profilunterstützend eine asymmetrische Gürtelkonstruktion angewandt wird, wobei die Asymmetrie sich auf eine dreigeteilte Bandage bezieht gekennzeichnet durch:
- unterschiedliche Kordmaterialien
- unterschiedliche Fadeneinstellungen
- unterschiedliche Lagenzahl und
- die sich hieraus ergebenden Kombinationsmöglichkeiten

Diese Aufgabe wird erfindungsgemäß dadurch gelöst, daß die Bandage im Reifenmittenbereich und in den jeweiligen Schulterbereichen Verstärkungselemente aus Materialien aufweist, die in bezug auf den Modul unterschiedlich sind. Bevorzugt werden Verstärkungselemente für die Reifenmittenbandage verwendet, die einen verhältnismäßig hohen Materialmodul aufweisen und geringlagig vorliegen können, und entsprechend werden Verstärkungselemente für die Reifenschulterbandagen verwendet, die einen demgegenüber verhältnismäßig niedrigen Materialmodul aufweisen und gegebenenfalls in mehreren Lagen vorliegen können. Diese Lagen können auch aufgespulte Spulbandagen sein.

Konstruktive Beispiele für den Einsatz von Bandagematerialien für asymmetrische Gürtelkonstuktionen können sein:

| **Außenschulter** | | | **Reifenmitte** | | | **Innenschulter** | | |
|---|---|---|---|---|---|---|---|---|
| **Mat.** | **Konstr.** | **epdm** | **Mat.** | **Konstr.** | **epdm** | **Mat.** | **Konstr.** | **epdm** |
| Nylon | 1400/2 | egal | Nylon | 940/2 | egal | Nylon | 1400/1 | egal |
| Reyon | 1840/2 | egal | Polyester | 1440/1 | egal | Nylon | 940/1 | egal |
| Aramid | 1670/2 | egal | Nylon | 1440/2 | egal | Reyon | 1840/1 | egal |
| Nylon | 720/2 | egal | Reyon | 1220/2 | egal | Aramid | 840/1 | egal |
| Polyester | 1100/2 | egal | Aramid | 1670/1 | egal | Nylon | 940/2 | egal |
| Nylon | 1400/1 | egal | Reyon | 1840/2 | egal | Nylon | 1400/2 | egal |
| Reyon | 1220/2 | egal | Reyon | 1840/2 | egal | Reyon | 1220/1 | egal |
| Nylon | 1400/1 | x | Nylon | 1400/1 | y | Nylon | 1400/1 | z |
| Nylon | 1400/1 | x | Reyon | 1840/2 | egal | Nylon | 1400/1 | y |
| Reyon | 1840/1 | x | Reyon | 1840/1 | y | Reyon | 1840/2 | egal |
| Polyester | 1100/2 | egal | Polyester | 1100/1 | x | Polyester | 1100/2 | y |

In dieser Aufstellung sind x, y und z ungleich groß. Die Differenz der Werte ist jeweils größer oder gleich 10 %.

Die Asymmetrie des Gürtelaufbaus wird also im wesentlichen bestimmt durch den Einsatz von unterschiedlichen Bandagenmaterialien und/oder unterschiedlichen Packungsdichten (epdm) bei gleichen textilen Kordmaterialien. Die einzelnen Bandagen können dabei in ihrer Breite aus schmalen Einzelbandagen (ab einer minimalen Breite von 3 mm) zusammengesetzt werden.

Die Bandagen werden vornehmlich entsprechend dem Reifenumfang ausgerichtet und das Kordmaterial bildet mit dem Reifenumfang einen Winkel zwischen 0° und 30°, wobei sich die unterschiedlichen Bandagenabschnitte (Außenschulter, Innenschulter, Reifenmitte) in ihrem Winkel unterscheiden können.

Ein weiterer Vorteil des Gürtelradialreifens, der getrennte Bandagen aus unterschiedlichen Verstärkungselementmaterialien, beispielsweise ausgewählt aus Polyamid, Polyester, Rayon, aromatischem Polyamid oder Kohlenstoffasern, aufweist, ist, daß flatspotarme Materialien verwendet werden, die die Eigenschaft des Abplattens im Ruhezustand des warmgefahrenen Reifens (Flatspotting) erheblich reduzieren, wenn solche flat-spot-armen Materialien für die Verstärkungselemente eingesetzt werden können.

Die Erfindung ist anhand von Beispielen in der Zeichnung weiter dargestellt und erläutert.

Es zeigen:
Fig. 1 einen Fahrzeugluftreifen in Radialbauart in Reifenschnittdarstellung,
Fig. 2 eine abgewandelte Darstellung des Reifens nach Fig. 1,
Fig. 3 eine weitere abgewandelte Darstellung des Reifens nach Fig. 1.

Der im wesentlichen aus Gummi oder gummiähnlichen Kunststoffen aufgebaute Fahrzeugluftreifen weist eine Karkasse, bevorzugt eine Radialkarkasse 2 auf, die in den Wülsten 4 durch Umschlingen von zugfesten Wulstkernen 6 verankert ist. Radial außen von der Radialkarkasse 2 befindet sich zwischen ihr und dem Laufstreifen 8 ein üblicher Verstärkungsgürtel 10, der beispielsweise aus zwei im Kreuzverband angeordneten Stahlkordlagen bestehen kann. Der Gürtel 10 ist radial außen von Abdeckbandagen 12, 14, 16 umgeben, die zusammen den Gürtel in seiner vollen Breite abdecken. Außer Stahlkord kann für den Gürtel 10 auch Aramidkord verwendet werden oder eine Verstärkung aus Kohlenstoffasern vorgesehen sein. Dieser Gürtel 10 ist mit getrennten Bandagen 12 für den Reifenmittenbereich und 14 und 16 für den jeweiligen Reifenschulterbereich versehen. Die Gesamtbreite von Gürtelverband und Bandagen ist mit A bezeichnet. Die Breite der mittig vorliegenden Bandage 12 trägt das Bezugszeichen D. Die Breiten der beiden Schulterbandagen 14 und 16 sind mit B und C bezeichnet. Sämtliche Bandagen können symmetrisch zur Reifenmittenlinie x-x angeordnet sein. Es ist aber auch möglich, die Bandagen in einer beliebigen Asymmetrie zur Reifenmittellinie x-x anzuordnen. Die Bandagen können in Form von Spulbandagen vorliegen. Sie können aber auch im Produktionsprozeß als einzelne Streifen aufgelegt werden. Die Breite C der Schulterbandage 14, zum Reifenäußeren hin angeordnet, liegt bevorzugt mit 5 % bis 45 % der Gesamtbreite A vor. Die Breite B der anderen Schulterbandage 16, die mehr zum Reifeninneren hin angeordnet ist, liegt vorzugsweise ebenfalls bei 5 % bis 45 % der Gesamtbreite A. Für die Mittel-bandage 12 liegt die bevorzugte Breite D bei 10 % bis 90 % der Gesamtbreite A. Denkbar ist aber auch, die Mittelbandage 12 wegzulassen. Ihre Breite D beträgt dann 0 % der Gesamtbreite A. Die Breiten C und D der Schulterbandagen 14 und 16 können dann bis zu 50 % der Gesamtbreite A betragen. Die Materialien für die Verstärkungselemente der Bandagen sind unterschiedlich. Durch die Unterschiede ergeben sich bei der Herstellung des Reifens unter Druck und Wärme unterschiedliche Spannungszustände in den Verstärkungselementen. Bei der Verwendung von Spulbandagen wird dies durch unterschiedlich verwendete Materialien für die Spulbandagenverstärkungselemente dadurch abgestimmt, daß abhängig von der Kordkonstruktion und dem Material für die jeweilige Spulbandage in Verbindung mit einer einlagigen oder mehrlagigen Spulanordnung die Spannungen über Gürtelbreite gesehen ausgeglichen werden. Gespulte Bandagenstreifen können dabei nebeneinanderliegend angeordnet sein, aber sie können auch in einer schindelförmigen Überdeckung vorliegen.

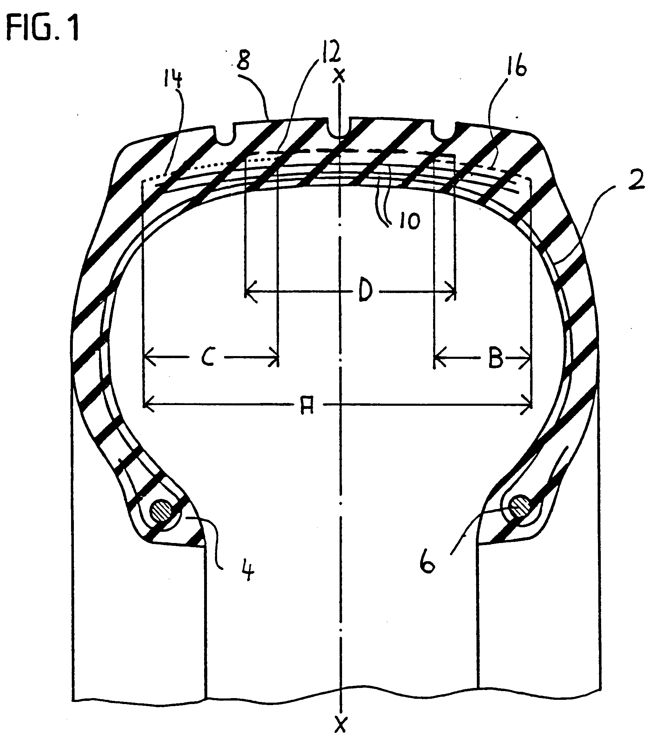

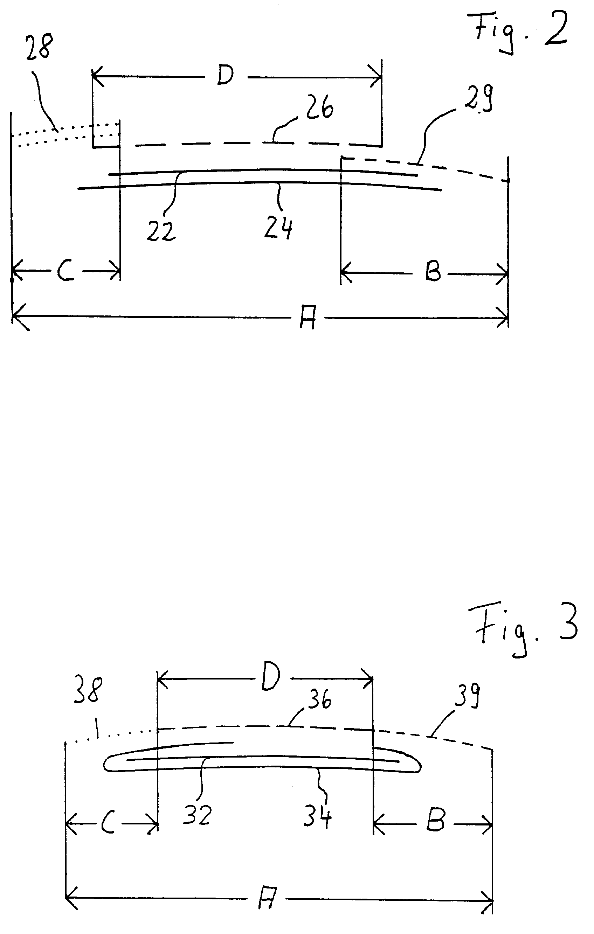

Der Gürtel nach Fig. 2 besteht aus zwei Verstärkungslagen 22, 24, von denen die radial innere Lage bevorzugt die breitere Lage ist. Die in der Mitte vorliegende Abdeckbandage 26 mit der Breite D bedeckt die radial äußere Verstärkungslage 22 an der Reifenaußenseite über den Verstärkungsaußenrand hinweg, während sie an der Reifeninnenseite vor dem Verstärkungslagenrand endet. Auf der Reifenaußenseite liegt die Abdeckbandage 28 zweifach mit gleicher Breite C vor. Dabei liegt die Abdeckbandage 28 radial außerhalb der mittleren Abdeckbandage 26 und überlappt diese teilweise. An der Reifeninnenseite dagegen ist eine einfache Abdecklage 29 mit der Breite B vorgesehen, die radial innerhalb der mittleren Abdecklage 26 angeordnet ist und von dieser teilweise überdeckt wird. Die Verhältnisse der Breiten A, B, C, D zueinander liegen in den gleichen Größenordnungen wie zu Fig. 1 vor.

Die Fig. 3 zeigt nun eine Anordnung, bei der um eine erste, radial äußere Verstärkungslage 32 eine zweite, gefaltete und im wesentlichen radial innere Verstärkungslage 34 asymmetrisch zur Reifenmittellinie herumgeschlagen ist. Dabei ist die Länge des Umschlags an der Reifenaußenseite größer als die Länge des Umschlags an der Reifeninnenseite. Die Reifenmittenbandage 36 liegt mit einer Breite D symmetrisch zur Reifenmittenebene x-x vor. Die Reifenseitenbandage 38 ist an der Reifenaußenseite mit der Breite C angeordnet und die Reifenseitenbandage 39 an der Reifeninnenseite mit der Breite B vorgesehen, wobei alle Bandagen aus unterschiedlichen Materialien oder aus gleichen Materialien mit unterschiedlichen Kennwerten bestehen können. Die drei verschiedenen Bandagen liegen nebeneinander auf einer in radialer Sicht gleichen Ebene und überlappen sich nicht. Die Verhältnisse der Breiten zueinander liegen in den gleichen Größenordnungen wie zur Fig. 1 vor.

In jedem Streifen sind die Verstärkungselemente im wesentlichen parallel zueinander angeordnet. Ihr Abstand beträgt etwa Verstärkungselementdicke.

Die Kombinationsbandage gewährleistet, daß die Spannungen über Gürtelbreite günstig ausgeglichen werden, daß alleine mit den Mitteln unterschiedlicher Verstärkungselementmaterialien gute Reifenrollwiderstandswerte erhalten werden und daß aufgrund der definiert bestimmten, jedoch wählbaren Materialien das insgesamte Abplattungsverhalten des Reifens erheblich verbessert wird. Der Reifen mit Gürtel und Bandagen aus unterschiedlichen Materialien erhält eine hohe Gleichförmigkeit (uniformity) und hält diese im wesentlichen auch im Ruhezustand nach Betriebseinsatz als Hochgeschwindigkeitsbreitreifen bei. Die Ränder des Gürtels, die bei Hochgeschwindigkeitsverhalten zum größeren Durchmesserwachstum tendieren, werden durch die Seitenbandagen fest bandagiert im vorfestgelegten Spannungsbereich gehalten. Die Mittenbandage nimmt im wesentlichen die Gürtelspannung aus der Radialerhebung bei der Vulkanisation und Spannung der Nachvulkanisation auf und hält im wesentlichen die Spannung aus den Radial- und Umfangskräften bei Hochgeschwindigkeitsbetrieb gleichmäßig über Gürtelbreite verteilt, wobei sie von den Randbandagen wirksam unterstützt wird. Durch Kombination der Materialien, Kordkonstruktion und Bandagenspannung in ein- oder mehrlagiger Anordnung kann eine gezielte Gürtelfestigkeit mit Festigkeitsstufung über Gürtelbreite auf einfache und kostensparende Bauweise zum Erreichen der zweckgewollten Ziele erhalten werden. Aufgrund der vorgesehenen unterschiedlichen Materialverwendung ist eine gezielte Festigkeitsstufung über Gürtelbreite zu erreichen. Sie ist alleine abhängig von der abgestimmten Auswahl der Materialien und der ausgewählten Kordkonstruktionen für die Verstärkungselemente der Bandagen. Spulbandagen werden beispielsweise lediglich mit einer bestimmten, wählbaren Spulspannung aufgelegt und es bedarf zur Abstimmung der Spannungsverhältnisse über Gürtelbreite nicht zusätzlicher Maßnahmen und Mittel für das Regeln und Steuern irgendwelcher Spulvorrichtungen.

## Patentansprüche

1. Fahrzeugluftreifen mit Reifenmittenbereich und Reifenschulterbereichen, bestehend aus einer Karkasse, insbesondere einer Radialkarkasse, mit einem durch eine gürtelartige Einlage verstärkten Laufstreifen und einem zusätzlichen radial außen angeordneten Abdeckungsmittel in Form eines auf dem Gürtelumfang vorliegenden Kord- oder Streifenmaterials aus textilen, zueinander parallelen und unter Wärmeeinwirkung sich verkürzenden Verstärkungselementen, dadurch gekennzeichnet, daß die Verstärkungselemente als Bandagen für den Reifenmittenbereich (12, 26, 36), den einen Reifenschulterbereich (14, 28, 38) und für den anderen Reifenschulterbereich (16, 29, 39) aus textilen Materialien mit jeweils unterschiedlichen Materialkennwerten vorgesehen sind.

2. Fahrzeugluftreifen nach Anspruch 1, dadurch gekennzeichnet, daß für die Bandagen der drei Bandagenbereiche Reifenmitte (12, 26, 36), Reifenaußenschulter (14, 28, 38) und Reifeninnenschulter (16, 29, 39) unterschiedliche textile Materialien vorgesehen sind.

3. Fahrzeugluftreifen nach Anspruch 1 oder 2, dadurch gekennzeichnet, daß die textilen Materialien für die Bandagen (12, 14, 16, 26, 28, 29, 36, 38, 39) ausgewählt sind insbesondere aus der Reihe der Stoffe Nylon, Polyester, Reyon oder aromatisches Polyamid.

4. Fahrzeugluftreifen nach wenigstens einem der Ansprüche 1 bis 3, dadurch gekennzeichnet, daß die textilen Materialien für die Bandagen (12, 14, 16, 26, 29, 36, 38, 39) mit unterschiedlicher Kordkonstruktion, insbesondere als Einfach- oder als Zweifach-Kord vorliegen.

5. Fahrzeugluftreifen nach wenigstens einem der vorherigen Ansprüche, dadurch gekennzeichnet, daß die textilen Materialien für die Bandagen (12, 14, 16, 26, 28, 29, 36, 38, 39) mit unterschiedlichen Packungsdichten vorliegen.

6. Fahrzeugluftreifen nach Anspruch 5, dadurch gekennzeichnet, daß die Differenz der Packungsdichten der Bandagen (12, 14, 16, 26, 28, 29, 36, 38, 39) größer oder gleich 10 % beträgt.

7. Fahrzeugluftreifen nach wenigstens einem der vorherigen Ansprüche, dadurch gekennzeichnet, daß die Bandage an der Reifenaußenseite (28) in einer größeren Dicke als die Bandage an der Reifeninnenseite (29) vorliegt.

8. Fahrzeugluftreifen nach wenigstens einem der vorherigen Ansprüche, dadurch gekennzeichnet, daß die Breite (B, C) der Bandagen im Reifenschulterbereich (14, 16, 28, 29, 38, 39) etwa mit 5 % bis 50 % der Gesamtbandagenbreite (A) und die Breite (D) der Bandage in Reifenmitte (12, 26, 36) mit 0 % bis 90 % der Gesamtbandagenbreite (A) vorgesehen sind.

9. Fahrzeugluftreifen nach wenigstens einem der vorherigen Ansprüche, dadurch gekennzeichnet, daß das Kordmaterial der Bandagen (12, 14, 16, 26, 28, 29, 36, 38, 39) mit der Reifenumfangslinie (x-x) einen Winkel zwischen 0° und 30° einschließt.

10. Fahrzeugluftreifen nach Anspruch 9, dadurch gekennzeichnet, daß die Winkel zwischen Kordmaterial der Bandagen (12, 14, 16, 28, 29, 36, 38, 39) und der Reifenumfangslinie (x-x) in den verschiedenen Bandagen unterschiedlich sind.

11. Fahrzeugluftreifen nach wenigstens einem der vorherigen Ansprüche, dadurch gekennzeichnet, daß wenigstens eine der Bandagen (12, 14, 26, 26, 28, 29, 36, 38, 39) als Spulbandage vorliegt.

12. Fahrzeugluftreifen nach Anspruch 11, dadurch gekennzeichnet, daß die Streifen von wenigstens einer Spulbandage nebeneinanderliegend angeordnet sind.

13. Fahrzeugluftreifen nach Anspruch 11, dadurch gekennzeichnet, daß die Streifen von wenigstens einer Spulbandage sich zumindest in ihren Randbereichen überlappen.

## Claims

1. Pneumatic vehicle tyre having a central region and shoulder regions, comprising a carcase, more especially a radial carcase, having a tread strip which is reinforced by a belt-like insert, and an additional covering means, which is disposed radially externally and is in the form of a cord or strip material, which material is situated on the belt circumference and formed from textile reinforcing elements which lie parallel to one another and shorten with the effect of heat, characterised in that the reinforcing elements are provided as bandages for the central region (12, 26, 36), for one shoulder region (14, 28, 38) and for the other shoulder region (16, 29, 39) and are formed from textile materials each with different material characteristics.

2. Pneumatic vehicle tyre according to claim 1, characterised in that different tetile materials are provided for the bandages of the three bandage regions - tyre centre (12, 26, 36), external shoulder (14, 28, 38) and internal shoulder (16, 29, 39).

3. Pneumatic vehicle tyre according to claim 1 or 2, characterised in that the textile materials for the bandages (12, 14, 16, 26, 28, 29, 36, 38, 39) are selected more especially from the group of substances nylon, polyester, rayon or aromatic polyamide.

4. Pneumatic vehicle tyre according to at least one of claims 1 to 3, characterised in that the textile materials for the bandages (12, 14, 16, 26, 29, 36, 38, 39) have a different cord construction and are more especially in the form of single or double cord.

5. Pneumatic vehicle tyre according to at least one of the preceding claims, characterised in that the textile materials for the bandages (12, 14, 16, 26, 28, 29, 36, 38, 39) have different packing densities.

6. Pneumatic vehicle tyre according to claim 5, characterised in that the difference between the packing densities of the bandages (12, 14, 16, 26, 28, 29, 36, 38, 39) is greater than or equal to 10 %.

7. Pneumatic vehicle tyre according to at least one of the preceding claims, characterised in that the bandage on the outside (28) of the tyre is thicker than the bandage on the inside (29) of the tyre.

8. Pneumatic vehicle tyre according to at least one of the preceding claims, characterised in that the width (B, C) of the bandages in the shoulder region (14, 16, 28, 29, 38, 39) is substantially between 5 % and 50 % of the total bandage width (A), and the width (D) of the bandage in the tyre centre (12, 26, 36) is between 0 % and 90 % of the total bandage width (A).

9. Pneumatic vehicle tyre according to at least one of the preceding claims, characterised in that the cord material of the bandages (12, 14, 16, 26, 28, 29, 36, 38, 39) forms with the circumferential line (x-x) of the tyre an angle of between 0° and 30°.

10. Pneumatic vehicle tyre according to claim 9, characterised in that the angles between the cord material of the bandages (12, 14, 16, 28, 29, 36, 38, 39) and the circumferential line (x-x) of the tyre are different in the various bandages.

11. Pneumatic vehicle tyre according to at least one of the preceding claims, characterised in that at least one of the bandages (12, 14, 16, 26, 28, 29, 36, 38, 39) is in the form of a wound bandage.

12. Pneumatic vehicle tyre according to claim 11, characterised in that the strips of at least one wound bandage are disposed adjacent one another.

13. Pneumatic vehicle tyre according to claim 11, characterised in that the strips of at least one wound bandage overlap one another at least in their edge regions.

## Revendications

1. Pneumatique de véhicule comportant une zone centrale et des zones d'épaulements, se composant d'une carcasse, notamment d'une carcasse radiale, d'une bande de roulement renforcée par un insert du genre ceinture, et d'un moyen de recouvrement additionnel, disposé radialement à l'extérieur, sous forme d'un matériau à base de câblés ou de bandes mis en place sur le pourtour de ceinture et constitué d'éléments de renforcement textiles, mutuellement parallèles et se raccourcissant sous l'effet de la chaleur, pneumatique caractérisé en ce que les éléments de renforcement sont agencés comme des bandages pour la zone centrale de pneumatique (12, 26, 36), pour une des zones d'épaulements du pneumatique (14, 28, 38) et pour l'autre zone d'épaulement du pneumatique (16, 29, 39), ces bandages étant formés de matériaux textiles ayant respectivement des caractéristiques différentes.

2. Pneumatique de véhicule selon la revendication 1, caractérisé en ce qu'il est prévu des matériaux textiles différents pour les bandages des trois zones à bandages, c'est-à-dire le milieu de pneumatique (12, 26, 36), l'épaulement extérieur de pneumatique (14, 28, 38) et l'épaulement intérieur de pneumatique (16, 29, 39).

3. Pneumatique de véhicule selon la revendication 1 ou 2, caractérisé en ce que les matériaux textiles pour les bandages (12, 14, 16, 26, 28, 29, 36, 38, 39) sont choisis notamment dans le groupe de matières comprenant nylon, polyester, rayonne ou polyamide aromatique.

4. Pneumatique de véhicule selon au moins une des revendications 1 à 3, caractérisé en ce que les matériaux textiles pour les bandages (12, 14, 16, 26, 28, 29, 36, 38, 39) se présentent sous différentes formes de câblés, notamment comme câblés simples ou câblés doubles.

5. Pneumatique selon au moins une des revendications précédentes, caractérisé en ce que les matériaux textiles pour les bandages (12, 14, 16, 26, 28, 29, 36, 38, 39) sont utilisés avec des densités de bourrage différentes.

6. Pneumatique de véhicule selon la revendication 5, caractérisé en ce que la différence entre les densités de bourrage des bandages (12, 14, 16, 26, 28, 29, 36, 38, 39) est supérieure ou égale à 10 %.

7. Pneumatique de véhicule selon au moins une des revendications précédentes, caractérisé en ce que le bandage situé sur le côté extérieur de pneumatique (28) a une plus grande épaisseur que le bandage situé sur le côté intérieur de pneumatique (29).

8. Pneumatique de véhicule selon au moins une des revendications précédentes, caractérisé en ce que la largeur (B, C) des bandages situés dans les zones d'épaulements de pneumatiques (14, 16, 28, 29, 38, 39) est comprise entre environ 5% et 50 % de la largeur totale de bandages (A) et en ce que la largeur (D) située dans la zone centrale (12, 26, 36) est comprise entre 0 % et 90 % de la largeur totale de bandages (A).

9. Pneumatique de véhicule selon au moins une des revendications précédentes, caractérisé en ce que le matériau en câblés des bandages (12, 14, 16, 28, 29, 36, 38, 39) fait avec le plan médian de pneumatique x-x un angle compris entre 0° et 30°.

10. Pneumatique de véhicule selon au moins une des revendications précédentes, caractérisé en ce que les angles formés entre le matériau en câblés des bandages (12, 14, 16, 28, 29, 36, 38, 39) et le plan médian de pneumatique x-x sont différents dans les divers bandages.

11. Pneumatique de véhicule selon au moins une des revendications précédentes, caractérisé en ce qu'au moins un des bandages (12, 14, 16, 28, 29, 36, 38, 39) se présente sous forme d'un bandage d'enroulement.

12. Pneumatique de véhicule selon la revendication 11, caractérisé en ce que les bandes d'au moins un bandage d'enroulement sont disposées les unes à côté des autres.

13. Pneumatique de véhicule selon la revendication 11, caractérisé en ce que les bandes d'au moins un bandage d'enroulement se recouvrent au moins dans leurs zones de bordure.
